(19) Europäisches Patentamt
European Patent Office
Office européen des brevets

(11) **EP 2 670 958 B1**

(12) **EUROPEAN PATENT SPECIFICATION**

(45) Date of publication and mention
of the grant of the patent:
**08.07.2020 Bulletin 2020/28**

(21) Application number: **12741524.8**

(22) Date of filing: **25.01.2012**

(51) Int Cl.:
*F01N 3/023* (2006.01)      *F01N 3/025* (2006.01)
*F01N 9/00* (2006.01)       *F01N 11/00* (2006.01)
*F02D 41/02* (2006.01)

(86) International application number:
**PCT/SE2012/050068**

(87) International publication number:
**WO 2012/105890 (09.08.2012 Gazette 2012/32)**

(54) **METHOD AND SYSTEM FOR REGENERATION OF A PARTICLE FILTER**

VERFAHREN UND SYSTEM ZUR REGENERATION EINES PARTIKELFILTERS

PROCÉDÉ ET SYSTÈME DE RÉGÉNÉRATION D'UN FILTRE À PARTICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2011 SE 1150062**

(43) Date of publication of application:
**11.12.2013 Bulletin 2013/50**

(73) Proprietor: **Scania CV AB
151 87 Södertälje (SE)**

(72) Inventors:
• **KARLSSON, Carl-Johan
SE-452 37 Strömstad (SE)**

• **TELBORN, Klas
S-152 71 Södertälje (SE)**

(74) Representative: **Scania CV AB
Patents, GP 117kv
151 87 Södertälje (SE)**

(56) References cited:
| | |
|---|---|
| EP-A2- 1 273 779 | DE-A1- 10 161 396 |
| DE-A1- 19 952 830 | GB-A- 2 416 717 |
| US-A1- 2004 226 288 | US-A1- 2008 140 296 |
| US-A1- 2008 140 296 | US-A1- 2009 090 099 |
| US-A1- 2010 132 334 | |

EP 2 670 958 B1

## Description

### Field of the invention

The present invention relates to particle filters and in particular to a method for regeneration of particle filters according to claim 1. The invention relates also to a system and a vehicle.

### Background to the invention

Growing official concern about pollution and air quality, especially in urban areas, has led to the adoption of emission standards and rules in many jurisdictions.

Such emission standards often set requirements which define acceptable limits for exhaust discharges from vehicles equipped with combustion engines. These standards often regulate, for example, levels of discharge of nitrogen oxides ($NO_x$) hydrocarbons (HC), carbon monoxide (CO) and particles from most types of vehicles.

The endeavour to meet such emission standards has led to ongoing research with a view to reducing emissions by means of post-treatment (cleaning) of the exhaust gases which arise from combustion in a combustion engine.

One way to post-treat exhaust gases from a combustion engine is a so-called catalytic cleaning process, so vehicles and many other at least large means of transport powered by combustion engines are usually also provided with at least one catalyst.

Post-treatment systems may also, either alternatively or in combination with one or more catalysts, comprise other components, e.g. particle filters. There are also cases where particle filters and catalysts are integrated with one another.

Combustion of fuel in the cylinders of a combustion engine results in the formation of soot particles. Particle filters are used to capture these soot particles, and work in such a way that the exhaust flow is led through a filter structure whereby soot particles are captured from the passing exhaust flow and are stored in the particle filter.

The particle filter fills with soot progressively during vehicle operation, and has sooner or later to be emptied of it, which is usually achieved by so-called regeneration.

Regeneration involves the soot particles, which mainly consist of carbon particles, being converted to carbon dioxide and/or carbon monoxide in one or more chemical processes, which regeneration may in principle be effected in two different ways.

One way is regeneration by so-called oxygen ($O_2$) based regeneration, also called active regeneration. In active regeneration, carbon is converted by oxygen to carbon dioxide and heat.

This chemical reaction is highly temperature-dependent and requires relatively high particle filter temperatures for desired reaction rates (filter emptying rates) to be achieved at all. At the same time, the temperature tolerance of the exhaust system's components is often limited, which means that active regeneration may be subject to a maximum permissible temperature which is low relative to the temperatures required for reaching desired reaction rates.

Instead of active regeneration, it is possible to employ $NO_2$ based regeneration, also called passive regeneration. In passive regeneration, nitrogen oxides and carbon oxides are formed by a reaction between carbon and nitrogen dioxide. The advantage of passive regeneration is that desired reaction rates, and hence the rate at which the filter is emptied, can be achieved at significantly lower temperatures.

As the regeneration is temperature-dependent, measures are adopted in both types of regeneration to raise the temperature of the particle filter and thereby achieve quicker regeneration.

Irrespective of whether active or passive regeneration is employed, however, it remains important that it be carried out in an effective way so that regeneration of a particle filter can be done within a reasonable time.

DE 199 52 830 A1 discloses a method for use in passive regeneration, where after-injection is utilised.

### Summary of the invention

An object of the present invention is to propose an improved method for regeneration of particle filters. This object is achieved by a method according to claim 1.

The present invention relates to a method pertaining to regeneration of a particle filter in a post-treatment system, which filter is intended to treat an exhaust stream arising from combustion in a combustion engine. Regeneration involves fuel being supplied to said post-treatment system. The method comprises

- raising a temperature of said particle filter by said exhaust flow being supplied with fuel for oxidation in said post-treatment system,
- discontinuing said supply of fuel to said exhaust flow when said particle filter temperature rises to a first level, and
- resuming said supply of fuel for oxidation to said post-treatment system when said particle filter temperature drops to a second level which is lower than said first level.

This affords the advantage that the temperature of the particle filter can be raised to a high level, a temperature corresponding to or exceeding that at which maximum regeneration rates are achieved, by supply of fuel, i.e. fuel in an oxidised unburnt form / unburnt fuel, to the exhaust flow which then oxidises in an oxidation catalyst and/or directly in the particle filter.

Thereafter discontinuing fuel supply to the exhaust flow makes it possible for passive ($NO_2$-based) regeneration to take place at high temperature while at the same time a large conversion of $NO_x$ to $NO_2$ can take place, with a resulting high regeneration rate when fuel supply is discontinued.

When the temperature of the particle filter has dropped to a second level, within the range 40-100% of maximum regeneration rate, fuel supply is resumed to again raise the temperature of the particle filter to a high level for another regeneration at high temperature. The method according to the invention may be repeated until the regeneration is deemed completed or has for some other reason to be discontinued.

According to a variation, which is not part of the invention, said first level may for example be a suitable temperature below that at which the regeneration rate during active regeneration exceeds that during passive regeneration. Assurance is thus possible that regeneration according to the present invention will at least largely be done by passive regeneration while at the same time the temperature may be kept at a level where risk of damage to components is avoided.

Further characteristics of the present invention and advantages thereof are indicated by the detailed description set out below of embodiment examples and the attached drawings.

**Brief description of the drawings**

Fig. 1a    depicts a power train of a vehicle in which the present invention may with advantage be used.

Fig. 1b    depicts a control unit in a vehicle control system.

Fig. 2    depicts an example of a post-treatment system of a vehicle in which the present invention may with advantage be used.

Fig. 3    illustrates an example of regeneration rate (soot burn-out rate) as a function of amount of soot in the particle filter, and its temperature dependency.

Fig. 4    illustrates the temperature dependency of oxidation of nitrogen oxide to nitrogen dioxide in an oxidation catalyst and the temperature dependency of the regeneration rate during oxidation of carbon by means of $NO_2$.

Fig. 5    illustrates the dependency of the regeneration rate on access to nitrogen dioxide during regeneration.

Fig. 6    illustrates schematically a method according to an example of an embodiment of the invention.

Fig. 7    is a temperature diagram of an example of regeneration according to the present invention.

**Detailed description of preferred embodiments**

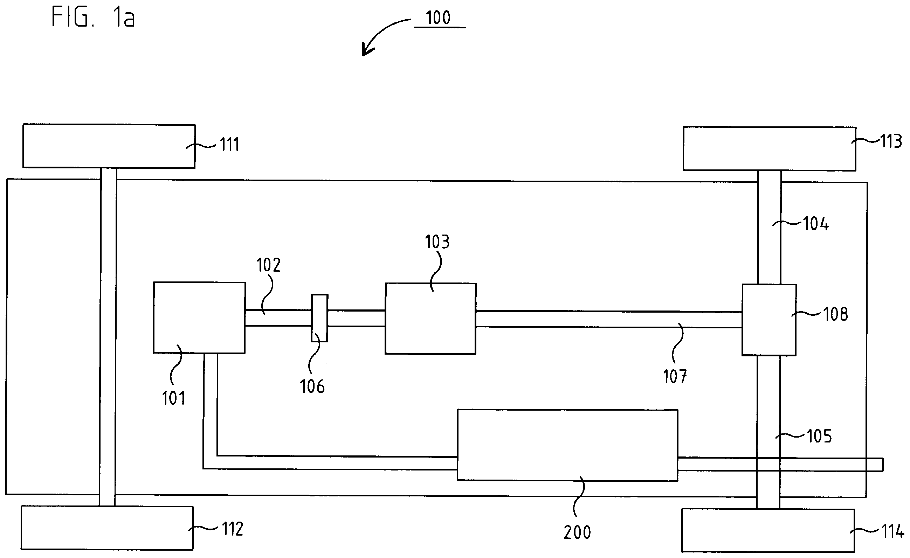

Fig. 1a depicts schematically a heavy vehicle 100, e.g. a truck, bus or the like, according to an example of an embodiment of the present invention. The vehicle 100 schematically depicted in Fig. 1a comprises a pair of forward wheels 111, 112 and a pair of powered rear wheels 113, 114. The vehicle further comprises a power train with a combustion engine 101 connected in a conventional way, by an output shaft 102 of the engine 101, to a gearbox 103, e.g. via a clutch 106.

An output shaft 107 from the gearbox 103 drives the powered wheels 113, 114 via a final gear 108, e.g. a conventional differential, and driveshafts 104, 105 which are connected to said final gear 108.

The vehicle 100 further comprises a post-treatment (exhaust cleaning) system 200 for treatment (cleaning) of exhaust discharges from the engine 101.

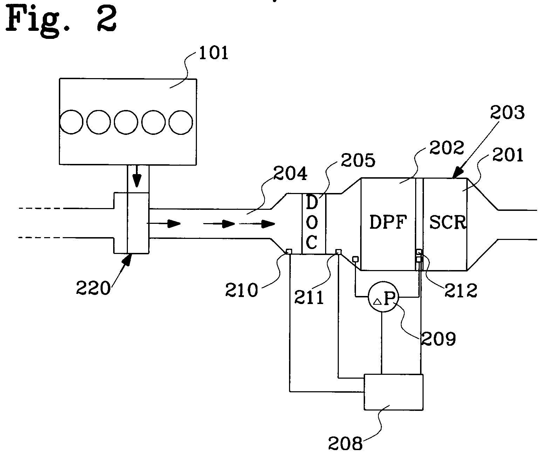

The post-treatment system is depicted in more detail in Fig. 2. The diagram illustrates the engine 101 of the vehicle 100, in which the exhaust gases (the exhaust flow) generated by the combustion are led via a turbo unit 220 (in turbo engines the exhaust flow arising from the combustion often drives a turbo unit to compress the incoming air for the combustion in the cylinders). The function of turbo units is well known and is therefore not described in more detail here. The exhaust flow is then led via a pipe 204 (indicated by arrows) to a particle filter (diesel particulate filter, DPF) 202 via an oxidation catalyst (diesel oxidation catalyst, DOC) 205.

The post-treatment system further comprises an SCR (selective catalytic reduction) catalyst 201 situated downstream of the particle filter 202. SCR catalysts use ammonia ($NH_3$), or compounds from which ammonia can be generated/formed, as additive for reducing the amount of nitrogen oxides $NO_x$.

The particle filter 202 may alternatively be situated downstream of the SCR catalyst 201, although this may be less advantageous in cases where the present invention relates to so-called passive regeneration, which is dependent on the nitrogen oxides which are usually reduced by the SCR catalyst. According to an embodiment of the present invention, the post-treatment system has no SCR catalyst at all.

The oxidation catalyst DOC 205 has several functions and utilises the surplus air to which the diesel engine process generally gives rise in the exhaust flow as a chemical reagent in conjunction with a noble metal coating in the oxidation catalyst. The catalyst is normally used primarily to oxidise remaining hydrocarbons and carbon monoxide in the exhaust flow to carbon dioxide and water. The oxidation of hydrocarbons (i.e. oxidation of fuel) also results in the formation of heat which is utilised by the present invention to raise the temperature of the particle filter.

The oxidation catalyst may also oxidise to nitrogen dioxide ($NO_2$) a large proportion of the nitrogen monoxides (NO) present in the exhaust flow. This nitrogen dioxide is also utilised in passive regeneration according to the present invention.

Further reactions may also take place in the oxidation catalyst.

In the embodiment depicted, DOC 205, DPF 202 and also the SCR catalyst 201 are integrated in a combined exhaust cleaning unit 203. It should however be noted that DOC 205 and DPF 202 need not be integrated in a combined exhaust cleaning unit but may instead be arranged in some other way found appropriate. For example, DOC 205 may be situated nearer to the engine 101. The SCR catalyst may for example also be separate from DPF 202 and/or DOC 205.

The post-treatment system set-up depicted in Fig. 2 usually occurs in heavy vehicles, at least in jurisdictions where stringent emission requirements apply, but as an alternative to the oxidation catalyst the particle filter may instead be provided with noble metal coatings so that the chemical processes which would occur in the oxidation catalyst occur instead in the particle filter, in which case post-treatment system will therefore have no DOC.

As previously mentioned, the combustion in the engine 101 results in the formation of soot particles. These soot particles need not, and are in many cases not allowed to, be discharged into the surroundings of the vehicle. Diesel particles consist of hydrocarbons, carbon (soot) and inorganic substances such as sulphur and ash. As mentioned above, these soot particles are captured by the particle filter 202, which works in such a way that the exhaust flow is led through a filter structure in which soot particles are captured from the passing exhaust flow in order to be stored in the filter. A very large proportion of the particles may be separated from the exhaust flow by the filter.

The particles thus separated from the exhaust flow therefore accumulate in the filter 202, causing it to fill with soot over time. Depending on factors such as current running conditions, the driver's mode of driving and the vehicle's cargo load, a larger or smaller amount of soot particles will be generated, so this filling with soot/particles will take place more or less quickly, but once the filter reaches a certain level of filling it needs "emptying". If the filter is filled to too high a level, the vehicle's performance may be affected and there may also be fire hazards due to soot accumulation in combination with high temperatures.

As above, emptying the particle filter 202 is done by regeneration whereby soot particles, carbon particles, are converted in a chemical process to, depending on the type of regeneration, carbon dioxide and/or nitrogen oxide and carbon monoxide. Over time the filter 202 has therefore to be regenerated at more or less regular intervals, and determining suitable times for its regeneration may for example be by means of a control unit 208 which may for example determine a suitable time or times at least partly on the basis of signals from a pressure sensor 209 which measures the differential pressure across the filter. The fuller the filter becomes, the higher the pressure difference across it will be.

No regeneration action is normally taken so long as the filter's filling remains below some predetermined level. For example, the control system's control of filter regeneration may be so arranged that no action is taken so long as the filter's degree of filling is for example below some suitable level within the range 60-80% or some other suitable degree of filling. The degree of filling may be estimated in any suitable way, e.g. on the basis of differential pressure as above, in which case a certain pressure difference will represent a certain degree of filling.

The control unit 208 also controls the regeneration process according to the present invention, as described in more detail below.

Generally, control systems in modern vehicles usually comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 2 depicts only the control unit 208, but vehicles of the type here concerned often have a relatively large number of control units, e.g. for control of engine, gearbox etc., as is well known to those skilled in the art.

The present invention may be implemented in the control unit 208 but may also be implemented wholly or partly in one or more other control units with which the vehicle is provided.

Control units of the type depicted are normally adapted to receiving sensor signals from various parts of the vehicle, e.g. said pressure sensor 209 and temperature sensors 210-212 depicted in Fig. 2, and also, for example, an engine control unit (not depicted). The control signals generated by control units normally depend also both on signals from other control units and on signals from components. For example, the control exercised by the control unit 208 over regeneration according to the present invention may for example depend on information received for example from the engine control unit and the temperature/pressure sensors depicted in Fig. 2.

Control units of the type depicted are also usually adapted to delivering control signals to various parts and components of the vehicle, e.g. in the present example to the engine control unit to demand/order control of the engine's combustion as below.

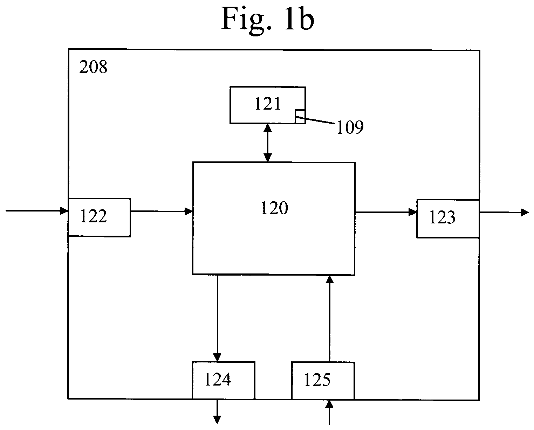

Control is often governed by programmed instructions, typically in the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in or connected to the control unit, and which is executed by the control unit. The vehicle's behaviour in a specific situation is therefore modifiable by altering the computer programme's instructions.

An example of a control unit (the control unit 208) is depicted schematically in Fig. 1b and may itself comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs for it to be able to perform calculations. The calculation unit 120 is also arranged to store partial or final results of calculations in the memory unit 121.

The control unit 208 is further provided with respective devices 122, 123, 124, 125 for receiving and sending input and output signals. These input and output signals may comprise waveforms, pulses or other attributes which the input signal receiving devices 122, 125 can detect as information and which can be converted to signals processable by the calculation unit 120. These signals are therefore conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, an MOST (Media Orientated Systems Transport) bus or some other bus configuration, or a wireless connection.

As above, regeneration may in principle be effected in two different ways. One way is by so-called oxygen ($O_2$) based regeneration, also called active regeneration. In active regeneration a chemical process takes place substantially as follows:

$$C + O_2 = CO_2 + heat \qquad\qquad (eq. 1)$$

Active regeneration thus converts carbon plus oxygen gas to carbon dioxide plus heat. However, this chemical reaction is highly temperature-dependent and requires high filter temperatures for appreciable reaction rates to be achieved at all. A lowest filter temperature of 500°C is typically required, but still higher temperatures are preferable for regeneration to take place at desired rates.

However, the maximum temperature usable in active regeneration may be limited by tolerances of the components concerned. For example, the particle filter 202 and/or any downstream SCR catalyst often have design limitations with regard to the maximum temperature to which they may be subjected. This means that active regeneration may, owing to components affected, be subject to a maximum permissible temperature for them which is unacceptably low relative to the lowest desired temperature for active regeneration, which has therefore to be very high for any usable reaction rate at all to be achieved, and in particular relative to the temperatures which are actually desired in active regeneration. In active regeneration, the soot load in the filter is normally burnt substantially completely. This means that after total regeneration of the filter, its soot level will be substantially 0%.

It is now increasingly usual that vehicles are equipped not only with particle filters 202 but also with SCR catalysts 201, which is at least one reason why so-called passive regeneration is often employed in order to avoid problems in the form of overheating of the downstream SCR catalyst treatment process.

Passive ($NO_2$ based) regeneration involves mainly the formation of nitrogen oxide and carbon monoxide in a reaction between carbon and nitrogen dioxide as follows:

$$NO_2 + C = NO + CO \qquad\qquad (eq. 2)$$

An advantage of passive (NO₂-based) regeneration is that desired reaction rates, and hence the rate at which the filter is emptied, can be achieved at lower temperatures. Passive regeneration of particle filters typically takes place at temperatures within the range 200°C - 500°C, although temperatures in the upper part of this range are normally preferable.

Compared with active regeneration, the result is a substantially lower temperature range, the whole of which may be below the minimum temperature desired in active regeneration. This is a great advantage in cases where, for example, there are SCR catalysts, since the risk of such a high temperature level as to cause damage to the SCR catalyst can thus in principle be completely avoided. It nevertheless remains important to achieve a relatively high temperature.

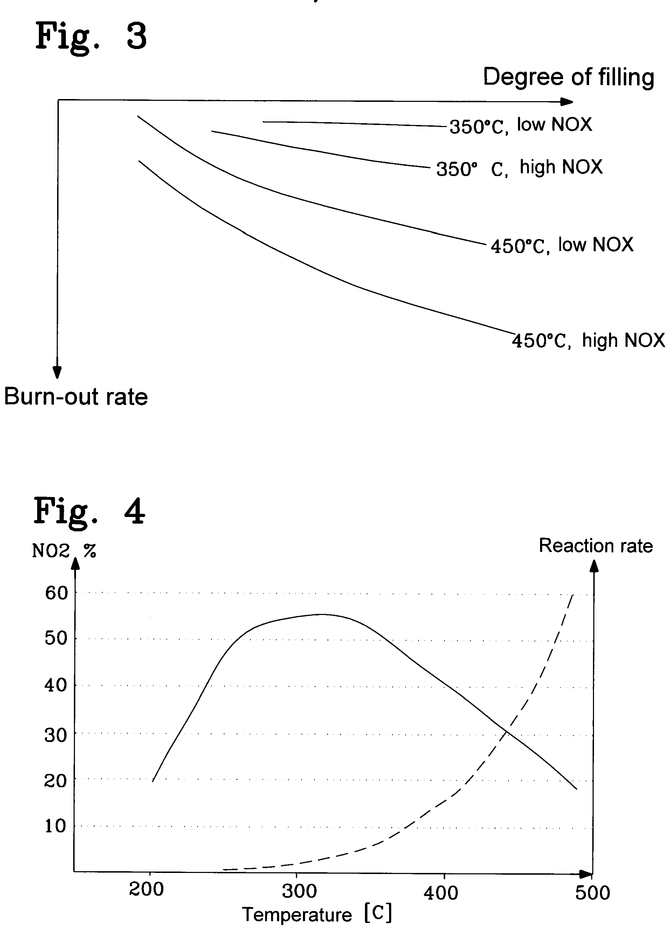

The present invention therefore relates to a method for passive regeneration, and Fig. 3 depicts an example of regeneration rate (soot burn-out rate) as a function of amounts of soot in the particle filter 202 in operating situations at two different temperatures (350°C and 450°C). The regeneration rate is also exemplified for respective low and high concentrations of nitrogen dioxide. As may be seen in the diagram, the burn-out rate is low at low temperature (350°C) and low concentrations of nitrogen dioxide. The temperature dependency of the regeneration rate is clearly indicated by the burn-out rate being relatively low even at high concentrations of nitrogen dioxide so long as the filter temperature is low. The burn-out rate is substantially higher at 450°C even in the case of low concentrations of nitrogen dioxide, although high temperature in combination with high NO₂ is obviously preferable.

Passive regeneration thus depends not only on the particle filter's temperature and amount of soot as in Fig. 3 but also, as indicated by equation 2 above and Fig. 3, on access to nitrogen dioxide. However, the proportion of nitrogen dioxide (NO₂) to the total amount of nitrogen oxides (NOₓ) generated by the engine's combustion is normally only about 0 - 10% of the total amount of nitrogen oxides in the exhaust flow. When the engine is under heavy load, the proportion of NO₂ may be as low as 2 - 4%. With the object of achieving rapid regeneration of the filter, it is therefore desirable that the proportion of nitrogen dioxide in the exhaust flow entering the filter be as high as possible.

It is therefore desirable to increase the amount of nitrogen dioxide NO₂ in the exhaust flow arising from the engine's combustion. There are several different ways of effecting this conversion, and it may be achieved as above by means of the oxidation catalyst 205, in which nitrogen oxide can be oxidised to nitrogen dioxide.

However, oxidation of nitrogen oxide to nitrogen dioxide in the oxidation catalyst is also a highly temperature-dependent process, as exemplified in Fig. 4. As may be seen in the diagram, it is possible at favourable temperatures for the proportion of nitrogen dioxide to the total amount of nitrogen oxides in the exhaust flow (continuous line) to be increased to nearly 60%. As the diagram also shows, a temperature of the order of 250-350°C would therefore be optimum in passive regeneration for achieving as much oxidation of nitrogen oxide to nitrogen dioxide as possible.

As described in relation to equation 2 and Fig. 3, however, a completely different temperature situation applies to the actual burn-out process. This temperature situation is represented by a broken line in Fig. 4 and, as may be seen, the reaction rate may be regarded as virtually non-existent at particle filter temperatures below 200-250° (it should however be noted that the temperature indications given are merely examples and that actual values may differ from them. For example, the way in which the temperatures are determined/calculated might affect the temperature limits. Some ways of determining the filter's temperature are exemplified below).

The burn-out rate (the regeneration rate) thus increases with the amount of NOₓ in the exhaust flow, the temperature of the exhaust flow (the particle filter) and the prevailing amount of soot in the filter. When there is free access to nitrogen dioxide, as high a filter temperature as possible would therefore be preferable. As may also be seen in Fig. 4, however, high temperatures lead to less oxidation of nitrogen oxide to nitrogen dioxide, which means that the regeneration cannot derive full benefit from the high filter temperature, since the reaction is limited by shortage of nitrogen dioxide.

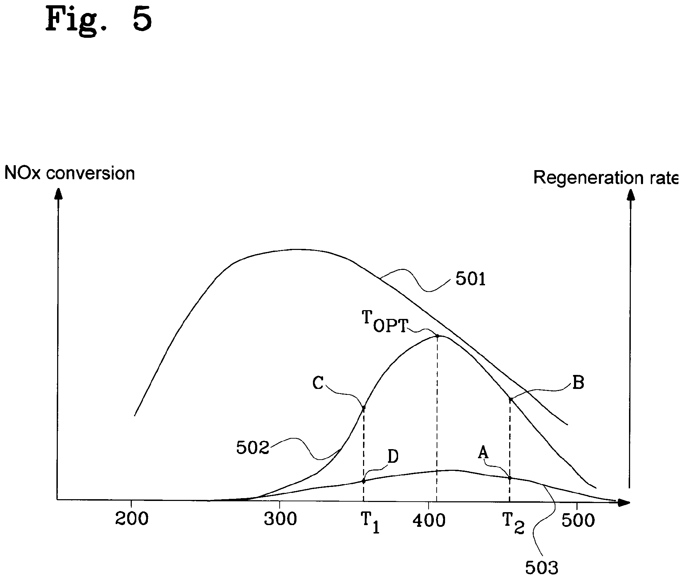

This also means that the efficiency of the regeneration will in reality not be like the broken line in Fig. 4 which supposes constant/high access to NO₂. Optimum working points thus also become difficult to determine. This is exemplified in Fig. 5, in which curve 501 represents the temperature dependency of NO₂ formation according to Fig. 4 (as below but supposing that NO₂ formation in the oxidation catalyst is not out-competed by fuel oxidation and hence in practice that no fuel oxidation is taking place). As NO₂ access decreases with increased temperature, the temperature dependency of the actual total reaction rate becomes a curve basically similar to curve 502 when there is NO₂ access according to curve 501. As NO₂ access decreases with increased temperature, the temperature dependency of the actual total reaction rate becomes markedly different from the case of free access to NO₂ (the broken line in Fig. 4).

As may be seen in Fig. 5, the optimum particle filter temperature is $T_{OPT}$, which may be of the order of 400-450°C.

To be able to convert soot to carbon dioxide/carbon monoxide as effectively as possible, it is therefore desirable for NOₓ (NO₂) contents to be as high as possible while at the same time the particle filter maintains a temperature close to $T_{OPT}$. If these conditions constantly prevailed, the particle filter would be continuously regenerated and soot build-up would never occur.

However, $T_{OPT}$ cannot be reached solely on the basis of the temperature of the exhaust flow. In typical truck/bus applications, the average temperature of the filter is rather somewhere in the range 150-300°C during normal vehicle operation.

Passive regeneration therefore generally involves adopting measures to raise the temperature of the particle filter and thereby achieve a faster regeneration rate.

These temperature-raising measures may be effected by controlling the engine in such a way as to achieve a high exhaust temperature, which is done by lowering the engine's efficiency to a low level so that a large part of the energy changes to heat. The vehicle is also commonly provided with ancillary units which are driven by the engine and thereby take power from the vehicle's propulsion. Examples comprise cooling units etc., and the engine's work and consequent exhaust temperatures can be further increased by controlling these ancillary units in such a way that they exert high or maximum load upon the engine.

However, such temperature-raising measures are still not sufficient to make it possible to reach $T_{OPT}$.

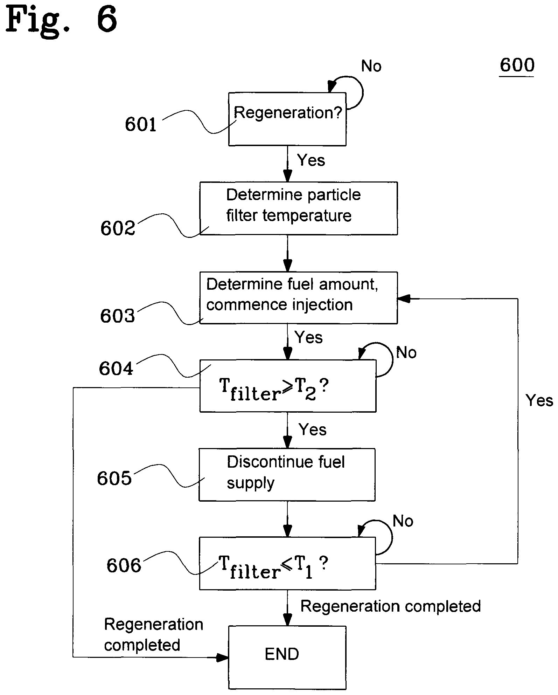

The present invention therefore applies, just as in so-called active regeneration as above, a method whereby fuel is added to the exhaust flow in order to burn (become oxidised) across the oxidation catalyst and thereby generate heat to warm the particle filter. However, the present invention does not use this fuel injection to effect active regeneration but rather to reach a more favourable temperature for soot combustion in passive regeneration. Fig. 6 illustrates an example of a method 600 according to the present invention.

The method begins at step 601 by determining whether regeneration is to be done. This may for example be determined as above by determining whether the differential pressure across the particle filter exceeds a certain level. In cases where regeneration is to be done, the method moves on to step 602 for determination of particle filter temperature and/or oxidation catalyst temperature.

The particle filter temperature may be determined in various ways. In the embodiment depicted in Fig. 2, a first temperature sensor 210 is situated upstream of the oxidation catalyst 205. A second temperature sensor 211 is situated downstream of the oxidation catalyst (upstream of the particle filter) and a third temperature sensor 212 is situated downstream of the particle filter 203. The particle filter temperature may for example be determined by determining the average of the temperatures determined by the sensors 211, 212. Alternatively, only the temperature from sensor 211 or 212 may be used. It is also possible to use some other suitable temperature sensor, e.g. sensor 210, which in conjunction with a model of the post-treatment system and/or, for example, the current exhaust flow calculates a particle filter temperature.

As step 602 it is also possible, in an embodiment, to begin other temperature-raising measures than the supply of fuel as described below to the exhaust flow according to the present invention. As above, these measures may for example take the form of controlling the engine in such a way as to achieve as high an exhaust temperature as possible, which may as above be done by controlling the engine towards low efficiency and/or by imposing as much load upon it as possible.

When it is determined that the particle filter temperature and/or the oxidation catalyst temperature is high enough, e.g. 250°C or some other suitable temperature, for it to be possible for fuel to become oxidised, the method moves on to step 603 to determine a suitable amount of fuel for supply to the exhaust flow, whereupon fuel injection commences. The amount of fuel may for example depend on the particle filter's temperature $T_{filter}$, current vehicle load, current engine speed etc. An alternative is to always supply the same amount of fuel, in which case control is based solely on the particle filter's temperature $T_{filter}$ as below.

Fuel supply to the exhaust flow affords the advantage that the filter temperature can be controlled quite independently of the current temperature of the exhaust flow (and therefore hereinafter the temperature of the particle filter). In principle, the oxidation catalyst reaching a temperature of about 250°C (as above, engine control may be applied as necessary to expedite/enable this oxidation catalyst temperature) will be sufficient to enable the temperature of the particle filter to be controlled independently of current exhaust temperature.

Thus it is possible to use added fuel to increase the temperature of the particle filter to desired levels, resulting in increased soot combustion rates as in Fig. 5.

As also explained above in relation to Figs. 4-5, however, the soot combustion rate depends also on access to $NO_2$. The problem with fuel injection is that the $NO_2$ formation is adversely affected by fuel oxidation. If the oxidation catalyst was infinitely large, $NO_x$ could be converted to $NO_2$ to the desired extent while at the same time the fuel would be oxidised. For space and cost reasons, however, catalyst size is limited, which means that catalyst capacity is usually not sufficient for it to be possible to conduct both reactions satisfactorily.

The oxidation catalyst works in such a way that it is primarily fuel (hydrocarbon) that will be oxidised, and only secondarily, if there is remaining capacity, will $NO_2$ be formed, with the result that $NO_2$ formation may be very little or substantially non-existent during fuel oxidation. Whether and to what extent $NO_2$ is formed during the fuel oxidation is controlled by the size of the catalyst and the volume of the exhaust flow (the larger the flow, the less the catalyst's potential "impact" upon it).

Raising the particle filter temperature according to the present invention is thus done at the expense of $NO_2$ formation. An important parameter for regeneration according to equation 2 above is thus also lost/impaired. This means that during supply of fuel there will be very little or no $NO_2$ formation, which in practice means that the reaction rate during fuel supply will not follow curve 502 in Fig. 5 but rather curve 503. As may be seen in the diagram, the regeneration rate will thus be very low during supply of fuel.

For this reason, at step 605, supply of (unburnt) fuel to the exhaust flow is discontinued, to the benefit of $NO_2$ formation, when the particle filter temperature $T_{filter}$ reaches a desired high temperature at step 604, $T_2$ in Fig. 5.

This means that the regeneration rate which during fuel supply to the exhaust flow follows curve 503 to point A will then jump/switch to point B to follow curve 502 instead. When the injection of fuel is halted, however, the temperature of the exhaust flow will normally not be high enough to maintain the temperature of the particle filter, which will therefore begin to drop. When it is found that it has dropped to $T_1$, at step 606 and the regeneration rate has therefore reached point C on curve 502, the method reverts to step 603 for another temperature rise, whereupon the regeneration rate drops to point D and thereafter follows curve 503 again until the particle filter temperature has again risen to $T_2$ as above, whereupon fuel supply is again halted so that another regeneration period begins.

The temperatures $T_1$, $T_2$ may be chosen in any suitable way and may also depend on how the particle filter temperature is defined (e.g. where the temperature regarded as the particle filter temperature is measured, as above). For example, $T_1$ may be 350°C, while $T_2$ may be 450°C. $T_2$ will thus also be well below the temperature limit at which active regeneration has an appreciable effect. The range about $T_{OPT}$ may be of any desired width, but the narrower it is the more often there will be warming of the particle filter.

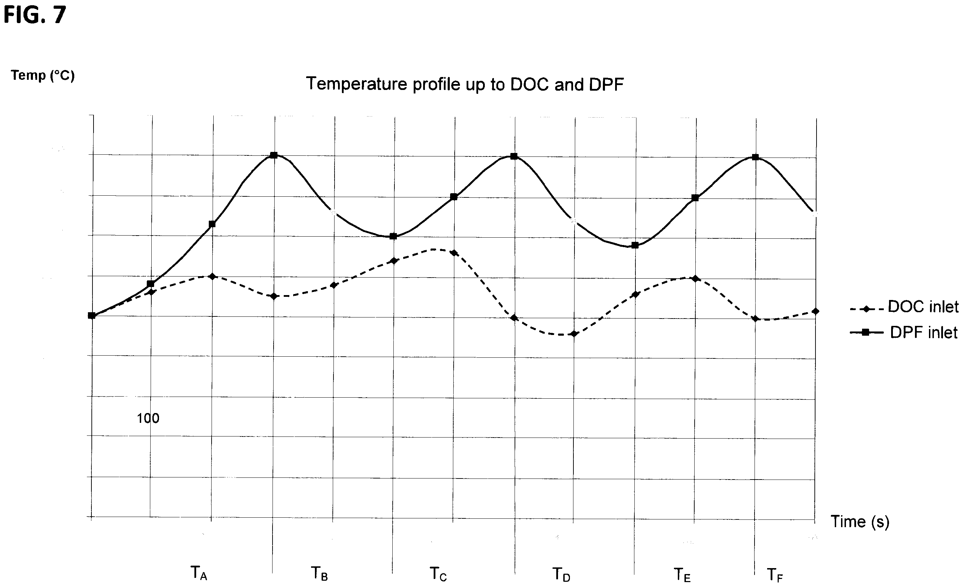

Fig. 7 is an example of a temperature graph for a regeneration process according to the invention. The continuous curve represents the particle filter temperature, the periods $T_A$, $T_C$, $T_E$ are used for temperature-raising measures resulting in low regeneration rates (curve 503 in Fig. 5), whereas $T_B$, $T_D$, $T_F$ are periods in which the regeneration rate follows curve 502 in Fig. 5.

Even if the portion ($T_B$, $T_D$, $T_F$) of the total regeneration time ($T_A$ - $T_F$) in which the regeneration rate is high is only part of the total regeneration time, the high particle filter temperatures during periods $T_B$, $T_D$, $T_F$ will certainly compensate for the amount of time required for warming the particle filter.

For example, the regeneration rate in the particle filter may be 100-1000 times faster at a temperature of 450°C than at 250°C, so the total result of regeneration according to the present invention is rapid regeneration of the particle filter without the disadvantages involved in active regeneration as above. Fig. 7 also depicts a broken curve representing the temperature at the inlet of the oxidation catalyst, i.e. representing also the temperature of the exhaust flow, and as may be seen it is significantly lower than $T_1$ for much of the time.

However, the effects of the present invention may be further improved. As above, the soot combustion rate increases with higher $NO_x$ level. The way in which the engine is controlled may therefore with advantage be synchronised with the supply of fuel. During the periods when HC (fuel) dosing is active ($T_A$, $T_C$, $T_E$) the main purpose of engine control is to achieve a high enough exhaust temperature to keep the temperature of the catalyst high enough for injected fuel to burn (become oxidised), to which end the engine may in this mode be caused to generate maximum heat.

During the actual soot combustion periods ($T_B$, $T_D$, $T_F$), however, it is desirable that the soot combustion rate be as high as possible, and since this depends on the amount of $NO_2$ it is necessary for the engine at steps 605, 606 to be controlled in such a way that high $NO_x$ contents are delivered. In other words, the engine has during the regeneration process to run in two modes, viz. a first mode in which it delivers high exhaust temperature and a second mode in which it runs in such a way as to result in high $NO_x$ formation.

It is relatively easy to control, for example, EGR engines in such a way that they generate high $NO_x$ contents. A quadrupling of $NO_x$ amount delivered may for example result in a doubling of the soot combustion rate.

The method illustrated in Fig. 6 is preferably repeated until the soot content in the particle filter drops to desired level. For example, the differential pressure may be monitored during regeneration to enable it to be discontinued when the differential pressure drops below a certain level and regeneration is therefore deemed completed, step 607. This determination may for example take place at step 604 and/or step 606 in Fig. 6. Passive regeneration does however afford the advantage that regeneration may be discontinued at any desired time and be resumed subsequently without the fire risks which active regeneration might entail.

The fuel injection may be done in various ways. For example, the post-treatment system may comprise in the exhaust system upstream of the oxidation catalyst an injector via which fuel can be injected into the exhaust flow.

Alternatively, fuel may be supplied to the exhaust flow by injection in the engine's combustion chamber (e.g. the engine's cylinders). The present invention is applicable in both types of fuel injection. In the case of fuel supply via the engine's combustion chamber, fuel will be injected so late in the combustion steps of the combustion cycle that only some or none of the fuel intended for the regeneration is burnt in the cylinders, with the result that (unburnt) fuel will accompany the exhaust flow to the post-treatment system.

Such injection is referred to, at least in the present patent application, as "late injection", meaning that it takes place very late in the combustion steps of the combustion cycle. Late injection, at least as defined in this description and the claims set out below, thus means injection whereby only a small proportion or none of the fuel injected late is burnt.

According to the present invention, injection therefore takes place at about 40-180 crankshaft degrees after the cylinder piston has passed top dead centre, which means that the fuel, still totally or largely unburnt, will accompany the exhaust flow to the oxidation catalyst in order to be oxidised therein and generate heat to warm the particle filter to desired temperature.

This fuel injection may for example follow the injection method according to Swedish patent application 1050889-3. The injection solution therein described reduces problems of so-called wall wetting of the engine's cylinders.

This is achieved by fuel injection taking place not in each combustion cycle, so that instead of a late injection in each combustion cycle larger fuel injections are done at longer intervals. For example, double the amount of fuel may be injected in every second combustion cycle or triple the amount in every third cycle, and so on, or according to some other suitable principle. It is generally the case according to the method referred to in 1050889-3 that a fuel amount determined for supply to said post-treatment system is distributed over n consecutive combustion cycles, where $n = 2,3,...n$, but fuel is only supplied during $m$ of said n combustion cycles, where $m = 1,2 ...,n\text{-}1$.

The solution referred to in 1050889-3 affords the further advantage of potentially accurate regulation of fuel injected into the exhaust flow, since larger and consequently more easily regulated amounts of fuel are injected at fewer times.

Fuel injection via the engine's combustion chamber and/or via the injector in the exhaust system may take place while the vehicle is travelling in the usual way, i.e. the usual fuel injection for the vehicle's propulsion need not be affected at all, since the sole purpose of the late injections according to the present invention is to supply fuel to the exhaust flow. As mentioned above, however, it may still be advantageous to also control the engine in a way which is advantageous for the regeneration process.

The present invention is exemplified above in relation to vehicles, but is also applicable to any means of transport in which exhaust cleaning systems as above are applicable, e.g. watercraft or aircraft with combustion/regeneration processes as above.

**Claims**

1. A method pertaining to passive regeneration of a particle filter (202) in a post-treatment system (200), such that said particle filter (202) is intended to treat an exhaust flow arising from combustion in a combustion engine (101), regeneration involves fuel being supplied to said post-treatment system (200), and the method comprises

   - raising a temperature of said particle filter (202) by fuel being supplied to said exhaust flow for oxidation in said post-treatment system (200),
   - discontinuing said supply of fuel to said exhaust flow when said particle filter temperature rises to a first level, said first level being a temperature corresponding to or exceeding that at which maximum regeneration rates in passive regeneration are achieved, and
   - resuming supply of fuel for oxidation to said post-treatment system (200) when said particle filter temperature drops to a second level which is lower than said first level, said second level being a level at which the regeneration rate has decreased to any suitable regeneration rate within the range 40-100% of maximum regeneration rate in passive regeneration.

2. A method according to claim 1, in which supply and discontinuation of supply of fuel to the exhaust flow are repeated until said particle filter (202) is regenerated to desired level or the regeneration is for some other reason discontinued.

3. A method according to either of claims 1 and 2, in which said fuel is wholly or at least partly oxidised in said post-treatment system (200) so that heat to warm said particle filter (202) is generated.

4. A method according to any one of claims 1-3, in which during said regeneration nitrogen dioxide ($NO_2$) combines with carbon (C) to form nitrogen oxide (NO) and carbon monoxide (CO) .

5. A method according to any one of the foregoing claims, in which said first level is an applicable temperature below 500ºC.

6. A method according to any one of the foregoing claims, in which said second level is an applicable temperature over 250ºC.

7. A method according to any one of the foregoing claims, in which said engine (101) comprises at least one combustion chamber, and fuel is supplied to said post-treatment system (200) via supply to said combustion chamber.

8. A method according to claim 7, further comprising

- determining a fuel amount for supply to said post-treatment system (200) distributed over n consecutive combustion cycles of said combustion chamber, $n$ = 2,3,...$n$, and
- supplying said fuel amount determined to said combustion chamber distributed over $m$ of said $n$ combustion cycles, $m$ = 1,2 ..., $n$-1.

9. A method according to any one of the foregoing claims, in which fuel is supplied to said post-treatment system (200) by means of an injector situated downstream of the engine's combustion chamber.

10. A method according to any one of the foregoing claims, further comprising said combustion engine, during supply of fuel to said exhaust flow, being controlled in such a way that a higher exhaust temperature is generated than when said engine is controlled in such a way that a substantially larger amount of nitrogen oxides is delivered, and said combustion engine, when supply of fuel to said exhaust flow is discontinued, being controlled in such a way that the substantially larger amount of nitrogen oxides is delivered than when said engine is controlled in such a way that a higher exhaust temperature is generated.

11. A method according to any one of the foregoing claims, in which said post-treatment system (200) comprises an oxidation catalyst (205) situated upstream of said particle filter (202), and said fuel supplied to said post-treatment system (200) is at least partly oxidised in said oxidation catalyst (205) .

12. A method according to any one of the foregoing claims, which is applied when the degree of filling of the particle filter (202) exceeds a first level.

13. A method according to any one of the foregoing claims, in which said regeneration is an $NO_2$ based regeneration of said particle filter (202).

14. A system pertaining to passive regeneration of a particle filter (202) in a post-treatment system (200), such that said particle filter (202) is intended to treat an exhaust flow arising from combustion in a combustion engine (101), regeneration involves fuel being supplied to said post-treatment system (200), and the system comprises

- means for raising a temperature of said particle filter (202) by supply of fuel to said exhaust flow for oxidation in said post-treatment system (200),
- means for discontinuing said supply of fuel to said exhaust flow when said particle filter temperature rises to a first level, said first level being a temperature corresponding to or exceeding that at which maximum regeneration rates in passive regeneration are achieved, and
- means for resuming supply of fuel for oxidation to said post-treatment system (200) when said particle filter temperature drops to a second level which is lower than said first level, said second level being a level at which the regeneration rate has decreased to any suitable regeneration rate within the range 40-100% of maximum regeneration rate in passive regeneration.

15. A vehicle (100) **characterised in that** it is provided with a system according to claim 14.


**Patentansprüche**

1. Verfahren betreffend eine passive Regeneration eines Partikelfilters (202) in einem Nachbehandlungssystem (200), wobei der Partikelfilter (202) dazu vorgesehen ist, einen bei einer Verbrennung in einem Verbrennungsmotor (101) entstehenden Abgasstrom zu behandeln, und eine Regeneration beinhaltet, das dem Nachbehandlungssystem (200) Kraftstoff zugeführt wird, wobei das Verfahren umfasst

- Erhöhen einer Temperatur des Partikelfilters (202) durch Kraftstoff, der dem Abgasstrom zur Oxidation in dem Nachbehandlungssystem (200) zugeführt wird,
- Unterbrechen der Kraftstoffzufuhr in den Abgasstrom, wenn die Partikelfiltertemperatur auf ein erstes Niveau steigt, wobei das erste Niveau eine Temperatur ist, die derjenigen entspricht oder sie übersteigt, bei der maximale Regenerationsraten einer passiven Regeneration erreicht werden, und
- Wiederaufnehmen einer Kraftstoffzufuhr zur Oxidation in das Nachbehandlungssystem (200), wenn die Partikelfiltertemperatur auf ein zweites Niveau fällt, das niedriger ist als das erste Niveau, wobei das zweite Niveau ein Niveau ist, bei dem die Regenerationsrate auf irgendeine geeignete Regenerationsrate innerhalb des Bereichs von 40-100% der maximalen Regenerationsrate bei einer passiven Regeneration gefallen ist.

2. Verfahren nach Anspruch 1, bei dem eine Zufuhr und Unterbrechung einer Kraftstoffzufuhr in den Abgasstrom wiederholt werden, bis der Partikelfilter (202) auf ein gewünschtes Niveau regeneriert ist oder die Regeneration aus einem anderen Grund beendet wird.

3. Verfahren nach Anspruch 1 oder 2, bei dem der Kraftstoff vollständig oder wenigstens teilweise in dem Nachbehandlungssystem (200) oxidiert wird, sodass die Hitze zum Erwärmen des Partikelfilters (202) erzeugt wird.

4. Verfahren nach einem der Ansprüche 1 bis 3, bei dem sich während der Regeneration Stickstoffdioxid ($NO_2$) mit Kohlenstoff (C) verbindet, um Stickoxid (NO) und Kohlenmonoxid (CO) zu bilden.

5. Verfahren nach einem der vorhergehenden Ansprüche, bei dem das erste Niveau eine geeignete Temperatur unterhalb von 500°C ist.

6. Verfahren nach einem der vorhergehenden Ansprüche, bei dem das zweite Niveau eine geeignete Temperatur oberhalb von 250°C ist.

7. Verfahren nach einem der vorhergehenden Ansprüche, bei dem der Motor (101) wenigstens eine Brennkammer aufweist und Kraftstoff in das Nachbehandlungssystem (200) durch ein Zuführen in die Brennkammer zugeführt wird.

8. Verfahren nach Anspruch 7, ferner umfassend

   - Ermitteln einer Kraftstoffmenge zum Zuführen in das Nachbehandlungssystem (200) verteilt über n aufeinanderfolgende Verbrennungszyklen der Brennkammer, n = 2, 3,... n und
   - Zuführen der ermittelten Kraftstoffmenge in die Brennkammer verteilt über m der n Verbrennungszyklen, m = 1, 2, ..., n-1.

9. Verfahren nach einem der vorhergehenden Ansprüche, bei dem Kraftstoff dem Nachbehandlungssystem (200) zugeführt wird mittels einer stromabwärts der Brennkammer des Motors angeordneten Einspritzdüse.

10. Verfahren nach einem der vorhergehenden Ansprüche, ferner umfassend ein Steuern, während einer Kraftstoffzufuhr in den Abgasstrom, des Verbrennungsmotors solchermaßen, dass eine höhere Abgastemperatur erzeugt wird als wenn der Motor so gesteuert wird, dass eine wesentlich größere Menge an Stickoxiden geliefert wird, und dass der Verbrennungsmotor, wenn eine Kraftstoffzufuhr in den Abgasstrom unterbrochen wird, so gesteuert wird, dass die wesentlich größere Menge an Stickoxiden geliefert wird als wenn der Motor so gesteuert wird, dass eine höhere Abgastemperatur erzeugt wird.

11. Verfahren nach einem der vorhergehenden Ansprüche, bei dem das Nachbehandlungssystem (200) einen stromaufwärts des Partikelfilters (202) angeordneten Oxidationskatalysator (205) umfasst und der dem Nachbehandlungssystem (200) zugeführte Kraftstoff zumindest teilweise in dem Oxidationskatalysator (205) oxidiert wird.

12. Verfahren nach einem der vorhergehenden Ansprüche, welches angewandt wird, wenn der Füllungsgrad des Partikelfilters (202) ein erstes Niveau übersteigt.

13. Verfahren nach einem der vorhergehenden Ansprüche, bei dem die Regeneration eine $NO_2$-basierte Regeneration des Partikelfilters (202) ist.

14. System betreffend eine passive Regeneration eines Partikelfilters (202) in einem Nachbehandlungssystem (200), wobei der Partikelfilter (202) dazu vorgesehen ist, einen bei einer Verbrennung in einem Verbrennungsmotor (101) entstehenden Abgasstrom zu behandeln, und eine Regeneration beinhaltet, dass dem Nachbehandlungssystem (200) Kraftstoff zugeführt wird, wobei das System umfasst

   - eine Einrichtung zum Erhöhen einer Temperatur des Partikelfilters (202) durch eine Kraftstoffzufuhr in den Abgasstrom zur Oxidation in dem Nachbehandlungssystem (200),
   - eine Einrichtung zum Unterbrechen der Kraftstoffzufuhr in den Abgasstrom, wenn die Partikelfiltertemperatur auf ein erstes Niveau steigt, wobei das erste Niveau eine Temperatur ist, die derjenigen entspricht oder sie übersteigt, bei der maximale Regenerationsraten bei einer passiven Regeneration erreicht werden, und
   - eine Einrichtung zur Wiederaufnahme einer Kraftstoffzufuhr zur Oxidation in das Nachbehandlungssystem (200), wenn die Partikelfiltertemperatur auf ein zweites Niveau fällt, das niedriger ist als das erste Niveau, wobei das zweite Niveau ein Niveau ist, bei dem die Regenerationsrate auf irgendeine geeignete Regenerationsrate innerhalb des Bereichs von 40-100% der maximalen Regenerationsrate bei einer passiven Regeneration gefallen ist.

**15.** Fahrzeug (100), **dadurch gekennzeichnet, dass** es mit einem System nach Anspruch 14 ausgestattet ist.

**Revendications**

**1.** Procédé relatif à une régénération passive d'un filtre à particules (202) dans un système de post-traitement (200), de sorte que ledit filtre à particules (202) est destiné à traiter un flux d'échappement résultant de la combustion dans un moteur à combustion (101),
la régénération implique que le carburant soit fourni audit système de post-traitement (200), et le procédé comprend

- l'élévation d'une température dudit filtre à particules (202) par le carburant fourni audit flux d'échappement pour oxydation dans ledit système de post-traitement (200),
- l'arrêt de ladite fourniture en carburant audit flux d'échappement lorsque ladite température de filtre à particules augmente à un premier niveau, ledit premier niveau étant une température correspondant à ou dépassant celle à laquelle les taux de régénération maximum en régénération passive sont atteints, et
- la reprise de la fourniture en carburant pour oxydation audit système de post-traitement (200) lorsque ladite température de filtre à particules chute à un deuxième niveau qui est inférieur audit premier niveau, ledit deuxième niveau étant un niveau auquel le taux de régénération a diminué à tout taux de régénération approprié dans la plage de 40-100 % du taux de régénération maximum en régénération passive.

**2.** Procédé selon la revendication 1, dans lequel la fourniture et l'arrêt de l'alimentation du combustible au flux d'échappement sont répétés jusqu'à ce que ledit filtre à particules (202) soit régénéré au niveau souhaité ou que la régénération soit arrêtée pour une autre raison quelconque.

**3.** Procédé selon l'une quelconque des revendications 1 et 2, dans lequel ledit combustible est entièrement ou au moins partiellement oxydé dans ledit système de post-traitement (200) afin que la chaleur pour chauffer ledit filtre à particules (202) soit générée.

**4.** Procédé selon l'une quelconque des revendications 1-3, dans lequel, au cours de ladite régénération, le dioxyde d'azote ($NO_2$) se combine avec du carbone (C) pour former de l'oxyde d'azote (NO) et du monoxyde de carbone (CO).

**5.** Procédé selon l'une quelconque des revendications précédentes, dans lequel ledit premier niveau est une température applicable inférieure à 500°C.

**6.** Procédé selon l'une quelconque des revendications précédentes, dans lequel ledit deuxième niveau est une température applicable supérieure à 250°C.

**7.** Procédé selon l'une quelconque des revendications précédentes, dans lequel ledit moteur (101) comprend au moins une chambre de combustion, et le carburant est fourni audit système de post-traitement (200) par alimentation à ladite chambre de combustion.

**8.** Procédé selon la revendication 7, comprenant en outre

- la détermination d'un volume de carburant pour la fourniture audit système de post-traitement (200) distribué sur n cycles de combustion consécutifs de ladite chambre de combustion, *n = 2, 3, ... n,* et
- la fourniture dudit volume de carburant déterminé à ladite chambre de combustion distribuée sur *m* desdits n cycles de combustion, *m = 1,2..., n-1.*

**9.** Procédé selon l'une quelconque des revendications précédentes, dans lequel le carburant est fourni audit système de post-traitement (200) au moyen d'un injecteur situé en aval de la chambre de combustion du moteur.

**10.** Procédé selon l'une quelconque des revendications précédentes, comprenant en outre ledit moteur à combustion, durant la fourniture en carburant audit flux d'échappement, étant contrôlé de manière à ce qu'une température d'échappement plus élevée soit générée alors lorsque ledit moteur est contrôlé de manière à ce qu'une quantité sensiblement plus importante d'oxydes d'azote soit délivrée, et

ledit moteur à combustion, lorsque la fourniture en carburant audit flux d'échappement est arrêté, étant contrôlé de manière à ce que la quantité sensiblement plus importante d'oxydes d'azote soit délivrée alors lorsque ledit moteur est contrôlé de manière à ce qu'une température d'échappement plus élevée soit générée.

11. Procédé selon l'une quelconque des revendications précédentes, dans lequel ledit système de post-traitement (200) comprend un catalyseur d'oxydation (205) situé en amont dudit filtre à particules (202), et ledit carburant fourni audit système de post-traitement (200) est au moins partiellement oxydé dans ledit catalyseur d'oxydation (205).

12. Procédé selon l'une quelconque des revendications précédentes, qui est appliqué lorsque le degré de remplissage du filtre à particules (202) dépasse un premier niveau.

13. Procédé selon l'une quelconque des revendications précédentes, dans lequel ladite régénération est une régénération sur base de $NO_2$ dudit filtre à particules (202).

14. Système relatif à la régénération passive d'un filtre à particules (202) dans un système de post-traitement (200), de sorte que ledit filtre à particules (202) est destiné à traiter un flux d'échappement résultant de la combustion dans un moteur à combustion (101),
la régénération implique que le carburant soit fourni audit système de post-traitement (200), et le système comprend

- des moyens pour l'élévation d'une température dudit filtre à particules (202) par fourniture de combustible audit flux d'échappement pour oxydation dans ledit système de post-traitement (200),
- des moyens pour l'arrêt de ladite fourniture de carburant audit flux d'échappement lorsque ladite température de filtre à particules augmente à un premier niveau, ledit premier niveau étant une température correspondant à ou dépassant celle à laquelle les taux de régénération maximum dans la régénération passive sont atteints, et
- des moyens pour la reprise de la fourniture en carburant pour oxydation audit système de post-traitement (200) lorsque ladite température de filtre à particules chute à un deuxième niveau inférieur audit premier niveau, ledit deuxième niveau étant un niveau auquel le taux de régénération a diminué à tout taux de régénération approprié dans la plage de 40-100 % du taux de régénération maximum en régénération passive.

15. Véhicule (100) **caractérisé en ce qu'**il est fourni avec un système selon la revendication 14.

FIG. 1a

EP 2 670 958 B1

# Fig. 1b

# Fig. 2

# Fig. 3

Degree of filling

350°C, low NOX

350° C, high NOX

450°C, low NOX

450°C, high NOX

Burn-out rate

# Fig. 4

NO2 %

Reaction rate

Temperature [C]

# Fig. 5

# Fig. 6

600

601 — Regeneration? ⟲ No

↓ Yes

602 — Determine particle filter temperature

↓

603 — Determine fuel amount, commence injection

↓ Yes

604 — $T_{filter} \geqslant T_2$ ? ⟲ No

↓ Yes

605 — Discontinue fuel supply

↓

606 — $T_{filter} \leqslant T_1$ ? ⟲ No

↓ Regeneration completed

Regeneration completed

END

Yes

FIG. 7

Temperature profile up to DOC and DPF

20

**REFERENCES CITED IN THE DESCRIPTION**

**Patent documents cited in the description**

- DE 19952830 A1
- EP 10508893 A